# FASCICULE DE BREVET EUROPEEN

(11) **EP 1 193 091 B1**
(45) Date de publication et mention de la délivrance du brevet: **01.08.2007**
(21) Numéro de dépôt: 01402515.9
(22) Date de dépôt: 28.09.2001
(51) Int. Cl.: B60J 7/04

(54) **Rideau cache-bagages pour véhicule**
Verschlusselement für den Kofferraum eines Fahrzeugs
Shutter element for baggage compartment for vehicle

(30) Priorité: 28.09.2000 FR 0012370
(43) Date de publication de la demande: 03.04.2002
(73) Titulaire: Société Européenne de Brevets Automobiles - SEBA, 75011 Paris (FR)
(72) Inventeur: Queveau, Gérard, 79140 Le Pin (FR); Guillez, Jean-Marc, 79140 Cirieres (FR)
(74) Mandataire: Geismar, Thierry

(56) Documents cités:
- EP-A- 0 989 008
- US-A- 4 786 099

## Description

La présente invention concerne un rideau cache-bagages pour des véhicules, notamment du type break ou pick-up selon le préambule de la revendication 1.

Un tel rideau est par exemple connu du document US-A- 4 786 099.

Les véhicules du type ci-dessus comportent un hayon arrière articulé à la carrosserie et un emplacement pour les bagages ou autres objets.

Dans le cas des breaks, la partie supérieure de l'emplacement ci-dessus est généralement fermée par un panneau fixé de façon amovible entre la banquette arrière et le hayon arrière.

Lorsque la banquette arrière est rabattue vers l'avant pour augmenter le volume de l'emplacement pour les bagages et autres objets, rien n'est prévu pour cacher de l'extérieur les objets disposés sur cet emplacement.

De ce fait, les objets sont visibles et peuvent susciter la curiosité des piétons, voire inciter des personnes malveillantes à voler le véhicule lorsque les objets situés à l'intérieur du véhicule ont une certaine valeur.

Il en est de même dans le cas des pick-ups dont l'intérieur de la benne est en permanence exposé à l'extérieur.

En outre, les objets situés dans la benne ne sont ni protégés contre les intempéries, ni contre le vol.

Dans le cas du document US-A-4 786 039, le rideau cache-bagages est logé dans un caisson situé à l'avant de la benne, ce qui réduit la surface de chargement.

Le but de la présente invention est de remédier aux inconvénients ci-dessus.

L'invention vise ainsi un rideau cache-bagages selon la revendication 1.

Les bagages et autres objets sont ainsi protégés contre les regards indiscrets, le vol et dans une certaine mesure contre les intempéries.

De plus, le fait que le rideau puisse être logé à l'intérieur du hayon permet de laisser libre la face intérieure du hayon, ce qui est avantageux notamment dans le cas des pick-ups.

D'autres particularités et avantages de l'invention apparaîtront encore dans la description ci-après :

Aux dessins annexés, donnés à titre d'exemples non limitatifs :
- la figure 1 est une vue schématique en coupe partielle d'un pick-up dont la benne est équipée d'un rideau cache-bagages selon l'invention,
- La figure 2 est une vue en coupe suivant le plan II - II de la figure 1.

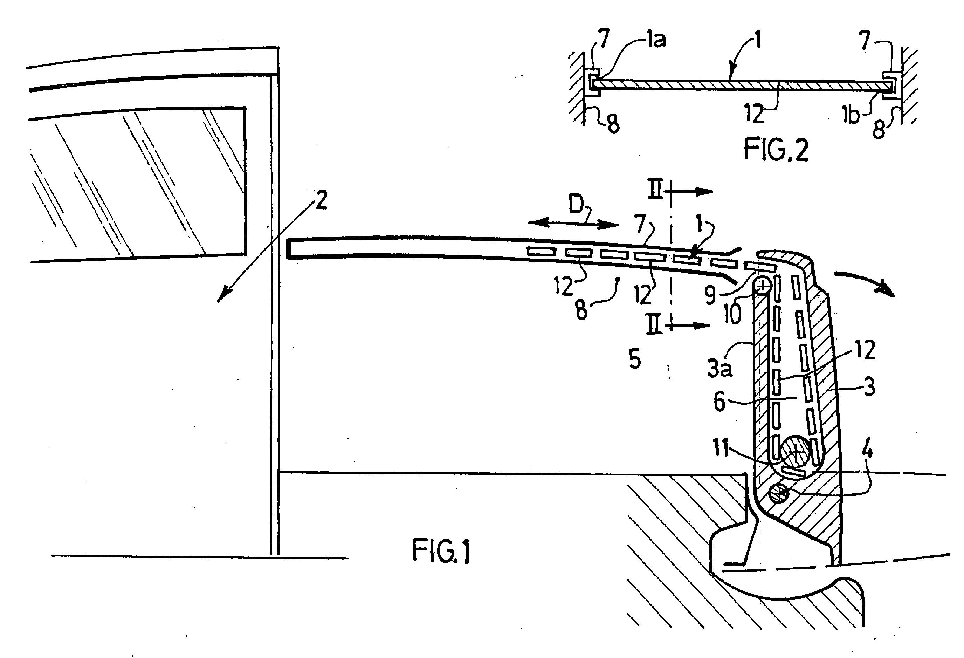

Dans la réalisation de la figure 1, le rideau cache-bagages (1) équipe un véhicule (2) comportant un hayon arrière (3) articulé à l'arrière de la carrosserie suivant un axe (4).

Le véhicule (2) comporte en outre un emplacement (5) pour les bagages situé en avant du hayon (3).

Le rideau (1) est apte à recouvrir l'emplacement (5) pour les bagages.

Conformément à l'invention, le rideau (1) est déplaçable entre une position dans laquelle, il est entièrement logé dans un logement (6) réalisé à l'intérieur du hayon (3) et une position dans laquelle il s'étend au-dessus de l'emplacement (5) pour les bagages.

Comme on le voit plus en détail sur la figure 2, les bords longitudinaux (1a, 1b) du rideau (1) sont chacun engagés dans une glissière (7) solidaire de la paroi latérale (8) du véhicule (2) qui ferme latéralement l'emplacement (5) pour les bagages.

Par ailleurs, la face (3a) du hayon (3) adjacente à l'emplacement (5) des bagages, comporte une fente (9) pour le passage du rideau (1) qui débouche à l'intérieur dudit logement (6) et qui est située dans le plan de chaque glissière (7).

Comme on le voit sur la figure 1, le bord inférieur de la fente (9) porte un rouleau rotatif (10) pour supporter le rideau (1) et guider son déplacement entre le logement (6) et l'emplacement (5) des bagages.

Dans l'exemple représenté le logement (6) réalisé à l'intérieur du hayon (3) s'étend sur toute la hauteur de ce dernier.

De plus, la partie inférieure du logement (6) comporte un rouleau rotatif (11) sur lequel le rideau (1) est enroulé.

Selon l'invention, le déplacement du rideau (1) est commandé par un moteur (non représenté) dont l'arbre de sortie est relié au rouleau rotatif (11).

Le rideau (1) peut être constitué par une feuille en matière souple renforcée par des lamelles rigides (12) s'étendant perpendiculairement à la direction de déplacement (D) du rideau (1).

Le rideau (1) peut également être constitué de lamelles rigides reliées de façon articulée les unes aux autres le long de leurs bords longitudinaux.

Dans l'exemple représenté sur la figure 1, le véhicule est du type pick-up dont l'emplacement pour les bagages et autres est situé dans une benne fermée à l'arrière par un hayon (3) rabattable vers l'extérieur.

Le rideau (1) qui ferme la partie supérieure de la benne est particulièrement bien adapté aux véhicules du type pick-up dont la benne est normalement complètement ouverte vers l'extérieur.

Lorsque le rideau (1) est en position fermée, les objets contenus dans la benne sont parfaitement protégés contre les regards indiscrets, le vol et les intempéries.

A cet effet, la légère pente dirigée vers l'arrière du rideau (1), favorise le ruissellement des eaux de pluie.

Grâce à la longueur ajustable du rideau, celui-ci est facilement adaptable sur des bennes de longueur variable et en particulier à un pick-up dont la cabine est transformable de deux à quatre places et dont la benne présente du fait de cette transformation deux longueurs différentes.

## Revendications

1. Rideau cache bagages (1) pour un véhicule (2) comportant un hayon arrière (3) articulé à la carrosserie et un emplacement (5) pour les bagages situés en avant dudit hayon (3), ledit rideau (1) étant apte à recouvrir l'emplacement (5) pour les bagages, ledit rideau (1) étant déplaçable entre une position dans laquelle il s'étend au-dessus de l'emplacement (5) pour les bagages, les bords longitudinaux (1a, 1b) du rideau (1) étant chacun engagés dans une glissière (7) solidaire de la paroi latérale (8) du véhicule qui ferme latéralement l'emplacement (5) pour les bagages et une position dans laquelle, il est entièrement logé dans un logement (6) **caractérisé en ce que** ledit logement (6) est réalisé à l'intérieur du hayon (3) dont la face (3a) comporte une fente (9) portant un rouleau rotatif (10) pour supporter le rideau (1) et guider son déplacement entre ledit logement (6) et ledit emplacement (5) pour les bagages, **en ce que** la partie inférieure dudit logement (6) comporte un autre rouleau rotatif (11) sur lequel le rideau (1) est enroulé et **en ce que** le déplacement du rideau (1) est commandé par un moteur dont l'arbre de sortie est relié au rouleau rotatif (11) de la partie inférieure dudit logement (6).

2. Rideau conforme à la revendication 1, **caractérisé en ce que** la fente (9) de la face (3a) du hayon (3) adjacente à l'emplacement (5) des bagages pour le passage du rideau (1) débouche à l'intérieur dudit logement (6) et est située dans le plan de chaque glissière (7).

3. Rideau conforme à l'une des revendications 1 à 2, **caractérisé en ce que** le logement (6) réalisé à l'intérieur du hayon (3) s'étend sur toute la hauteur de ce dernier.

4. Rideau conforme à l'une des revendications 1 à 3, **caractérisé en ce qu'**il est constitué par une feuille en matière souple renforcée par des lamelles rigides (12) s'étendant perpendiculairement à la direction de déplacement (D) du rideau (1).

5. Rideau conforme à l'une des revendications 1 à 3, **caractérisé en ce qu'**il est constitué de lamelles rigides reliées de façon articulée les unes aux autres le long de leurs bords longitudinaux.

6. Véhicule du type pick-up comprenant une benne fermée à l'arrière par un hayon (3) rabattable vers l'extérieur, **caractérisé en ce que** ladite benne est équipée d'un rideau (1) conforme à l'une des revendications 1 à 5.

## Claims

1. Luggage-concealing cover (1) for a vehicle (2) comprising a rear tailgate (3) hinged to the vehicle body and a space (5) for luggage located to the front of said tailgate (3), said cover (1) being capable of covering the baggage space (5), said cover (1) being mobile between a position in which it extends over the baggage space (5), each of the longitudinal edges (1a, 1b) of the cover (1) being inserted in a guide rail (7) solidly attached to the side wall (8) of the vehicle which laterally closes the baggage space (5), and a position in which it is completely housed in a housing (6), **characterised in that** said housing is formed inside the tailgate (3), the front (3a) of which comprises a slot (9) carrying a rotary roller (10) for supporting the cover (1) and guiding its movement between said housing (6) and said baggage space (5), **in that** the bottom of said housing (6) comprises another rotary roller (11) on which the cover (1) is wound, and **in that** the movement of the cover (1) is controlled by a motor with its output shaft connected to the rotary roller (11) at the bottom of said housing (6).

2. Cover according to claim 1, **characterised in that** the slot (9) in the front (3a) of the tailgate (3) adjacent to the baggage space (5) allowing the cover (1) to pass through it opens into said housing (6) and is in the same plane as each guide rail (7).

3. Cover according to one of the claims 1 or 2, **characterised in that** the housing (6) formed inside the tailgate (3) extends through the entire height of the latter.

4. Cover according to any one of the claims from 1 to 3, **characterised in that** it consists of a sheet of flexible material reinforced by rigid strips (12) extending perpendicular to the direction of movement (D) of the cover (1).

5. Cover according to any one of the claims from 1 to 3, **characterised in that** it consists of rigid strips linked together in a hinged manner along their longitudinal edges.

6. Pick-up type vehicle comprising a bed closed at the rear by a tailgate (3) which can be folded outwards, **characterised in that** said bed is equipped with a cover (1) according to any one of the claims from 1 to 5.

## Patentansprüche

1. Vorhang zum Abdecken von Gepäck (1) in einem Fahrzeug (2), das eine an die Karosserie gelenkig angeschlagene Heckklappe (3) und einen Gepäckraum (5) vor der besagten Heckklappe (3) umfaßt, wobei der besagte Vorhang (1) geeignet ist, den besagten Gepäckraum (5) zu überdecken, wobei der besagte Vorhang (1) verschiebbar ist zwischen einer Position, in der er sich über dem Gepäckraum (5) erstreckt, wobei die Längskanten (1a, 1b) des Vorhangs (1) jeweils in eine Schiene (7) eingreifen, die fest mit der Seitenwand (8) des Fahrzeugs verbunden ist, die seitlich den Gepäckraum (5) schließt, und einer Position, in der er vollkommen in einer Aufnahme (6) untergebracht ist, **dadurch gekennzeichnet, daß** die besagte Aufnahme (6) im Innern der Heckklappe (3) ausgeführt ist, deren Vorderseite (3a) einen Schlitz (9) aufweist, der eine Drehrolle (10) trägt, um den Vorhang (1) zu unterstützen und seine Verschiebung zwischen der besagten Aufnahme (6) und dem besagten Gepäckraum (5) zu leiten, und daß der untere Teil der besagten Aufnahme (6) eine andere Drehrolle (11) umfaßt, auf der der Vorhang (1) aufgerollt wird, und daß die Verschiebung des Vorhangs (1) von einem Motor gesteuert wird, dessen Ausgangswelle mit der Drehrolle (11) des unteren Teils der besagten Aufnahme (6) verbunden ist.

2. Vorhang nach Anspruch 1, **dadurch gekennzeichnet, daß** der Schlitz (9) der Vorderseite (3a) der Heckklappe (3), die an den Gepäckraum (5) anschließt, für den Durchgang des Vorhangs (1) ins Innere der besagten Aufnahme (6) führt und sich in der Ebene jeder Schiene (7) befindet.

3. Vorhang nach einem der vorstehenden Ansprüche 1 bis 2, **dadurch gekennzeichnet, daß** sich die im Innern der Heckklappe (3) gestaltete Aufnahme (6) über deren gesamte Höhe erstreckt.

4. Vorhang nach einem der vorstehenden Ansprüche 1 bis 3, **dadurch gekennzeichnet, daß** er aus einer Folie aus einem weichen mit starren Lamellen (12) verstärkten Material besteht, die sich senkrecht zur Verschieberichtung (D) des Vorhangs (1) erstreckt.

5. Vorhang nach einem der vorstehenden Ansprüche 1 bis 3, **dadurch gekennzeichnet, daß** er aus starren Lamellen besteht, die an ihren Längskanten gelenkig miteinander verbunden sind.

6. Fahrzeug von der Art eines Pickups, der einen Kipper umfaßt, der hinten durch eine Heckklappe (3) verschlossen ist, die nach außen abgeklappt werden kann, **dadurch gekennzeichnet, daß** der besagte Kipper mit einem Vorhang (1) ausgerüstet ist, der mit einem der Patentansprüche 1 bis 5 übereinstimmt.
